# EUROPÄISCHE PATENTSCHRIFT

(11) **EP 0 425 755 B1**
(45) Veröffentlichungstag und Bekanntmachung des Hinweises auf die Patenterteilung: **29.06.1994**
(21) Anmeldenummer: 90105432.0
(22) Anmeldetag: 22.03.1990
(51) Int. Cl.: B62K 25/00, B62K 21/20

(54) **Achsschenkellenkung für ein Einspurfahrzeug, insbesondere ein Motorrad**
Steering stub axle for a single track vehicle, particularly a motorcycle
Porte-fusée pour une véhicule à une seule trace, en particulier une motocyclette

(30) Priorität: 03.11.1989 DE 3936567
(43) Veröffentlichungstag der Anmeldung: 08.05.1991
(73) Patentinhaber: Helms, Hans Günter, D-26125 Oldenburg (DE); Vosteen, Klaus, D-26125 Oldenburg (DE)
(72) Erfinder: Helms, Hans Günter, D-26125 Oldenburg (DE); Vosteen, Klaus, D-26125 Oldenburg (DE)

(56) Entgegenhaltungen:
- EP-A- 0 321 803
- DE-A- 3 833 880
- FR-A- 2 494 208

## Beschreibung

Die Erfindung betrifft eine Achsschenkellenkung für ein Einspurfahrzeug, insbesondere ein Motorrad, bei der das lenkbare Rad auf einem Achsschenkel am unteren Ende eines Lenkarms gelagert ist, welcher über ein Lenklager in dem vorderen Anlenkpunkt eines mit seinem hinteren Lagerpunkt am Zweiradrahmen oder am Motorgehäuse angelenkten Längslenkers gehalten ist, sowie an seiner Oberseite in einer nicht linearen Kulisse geführt wird.

Achsschenkellenkungen sollen die bei Motorrädern üblichen Teleskopgabeln ersetzen, in erster Linie, um den Nachteil der Teleskopgabeln, ihre Anfälligkeit gegen Verwindungen, sowie die sich bei Einfederung stark verändernde Fahrwerksgeometrie zu vermeiden. Bei bekannten Achsschenkellenkungen stellt der untere Längslenker eine das Rad führende geschobene Schwinge dar, deren Schwingbewegungen sich ohne weiteres mit üblichen Mitteln abfedern lassen. Aus den abgefederten Schwingbewegungen des Längslenkers resultiert jedoch eine Bewegung des vorderen Anlenkpunktes, und somit auch des Radlagers, auf einem Kreisbogen um den hinteren Anlenkpunkt. Der das Rad tragende Lenkarm, der auch die Lenkbefehle an das Rad übermitteln soll, kann deshalb nicht in einem, wie bei Teleskopgabeln üblichem Lenkkopf geführt werden. Er wird gegebenenfalls mit einem zweiten, oberen Längslenker verbunden, welcher mehr oder weniger parallel zum unteren Längslenker verläuft. Oder aber der Lenkarm wird an seiner Oberseite in einer Linearführung geführt.

Bei den bekannten Achsschenkellenkungen ergibt sich weiterhin auch noch der Nachteil, daß der Lenker mit den die Lenkachse definierenden Bauteilen verdrehfest zu verbinden ist, dabei aber vermieden werden muß, das der Lenker die abgefederten Schwingbewegnungen des Lenkarms oder des oberen Längslenkers mitmacht. Für die Einleitung der Lenkbefehle in den Lenkarm sind somit besondere konstruktive Maßnahmen erforderlich, die, wie jede konstruktive Maßnahme, in sich einen Kompromiß darstellen und gegenüber anderen Lösungen der gleichen Probleme zwar Vorteile haben, dabei aber auch Nachteile in Kauf zu nehmen sind.

Der Erfindung liegt die Aufgabe zugrunde, eine Achschenkellenkung so weiterzubilden, daß sie bei minimalstem Bau- und Konstruktionsaufwand möglichst viele Vorteile in sich vereint.

Diese Aufgabe ist erfindungsgemäß dadurch gelöst, daß über eine mit dem Lenker verbundene, nicht lineare Kulissenführung des Lenkarms aus Lenkbewegungen resultierende Lenkmomente auf den Lenkarm übertragbar sind.
Bei der erfindungsgemäßen Achsschenkellenkung kann die Kulissenführung, ebenso wie der Längslenker, die aufgrund der Federung verursachten Schwingungen mitmachen, so, daß insbesondere Fahrbahnstöße, aber auch die beim Bremsen und beim Beschleunigen auftretenden Nickungen abgefedert werden. Gleichzeitig dient die Kulissenführung auch der Übertragung der Lenkbefehle auf den Lenkarm. Die Kulissenführung erfüllt somit mehrere Funktionen, wodurch sich der Bauaufwand verringert. Dies ist bei Motorrädern, die für den Rennsport benutzt werden, aufgrund der erzielten Gewichtsersparnis von wesentlichem Vorteil.

Lenkbefehle werden bei Zweirädern aus einer quer zur Fahrtrichtung ausgerichteten Lenkstange auf das lenkbare Rad übertragen. Lenkbefehle bewirken eine Schwenkung der an der Übertragung der Lenkbefehle beteiligten Bauteile um die durch die Anordnung von Lenklagern bestimmte geometrische Lenkachse.

Um den Lenkarm in erfindungsgemäßer Weise zum Lenken zu betätigen ist er an seiner Oberseite in einem Bauteil geführt, das sowohl den Lenker aufnimmt, als auch über die nicht lineare Kulissenführung eine gewünschte Einfederungskurve beschreibt. Das Bauteil ist an seiner Ober- und Unterseite in je einem Lager fixiert, die zusammen die Lenkachse bilden. Die Form der den Lenkarm mit besagtem Bauteil verbindenden Kulissenführung kann der eines Kreisausschnittes, als auch der eines Abschnittes einer Parabel oder Hyperbel entsprechen. Sinn der nicht linearen Führung ist die Erzeugung eines progressiven Bremsnickausgleiches, das heißt einer abhängig vom Einfederweg zunehmenden, der Einfederung infolge Bremsung entgegengerichteten Abstützreaktion. Höhe und Verlauf dieses Effektes werden durch die Krümmung der Führung und deren Verlauf bestimmt.

Konstruktiv gelöst ist diese Anordnung in einer ersten Ausführung der erfindungsgemäßen Achsschenkellenkung dadurch, daß sich in dem mit dem Lenker verbundenen Bauteil zwei gekrümmte Führungsleisten in Form zweier Laufschienen befinden, auf denen sich je zwei Laufrollen abwälzen, die auf je einer gemeinsamen Grundplatte gelagert sind, die wiederum verdrehfrei mit dem oberen Ende des Lenkarms verbunden sind. Als zusätzliche Verdrehfreiheit infolge einer Abweichung des vorderen Anlenkpunktes des unteren Längslenkers von der durch die beiden Lenklager gebildeten Lenkachse ist eine Verdrehfreiheit in Richtung der Motorradlängsachse, rechtwinklig zur Lenkachse erforderlich.

Als einfachste Lösung bei geringen Lenkwinkelfehlern ist die Ausführung einer torsionsweichen, elastisch verwindbaren Verbindung zwischen dem oberen Ende des Lenkarms und der Aufnahme der Führungsrollenträger möglich.

Bei einer zweiten Ausführung ist das obere Ende des Lenkarms mithilfe eines Kreuzgelenks mit den Führungsrollenträgern verbunden.

Bei einer Weiterbildung der erfindungsgemäßen Achsschenkellenkung ist als einfachste Möglichkeit auch die einseitige Aufnahme des oberen Endes des Lenkarms in einer einzelnen Führungsschiene möglich.

Eine weitere Ausführungsmöglichkeit stellt sich in der Umkehrung von Führung und Laufrollenlagerung dar, wobei sich die Laufrollenlagerung an dem auch den Lenker aufnehmendem Lenkbauteil befindet, während die Führungsschienen das obere Ende des Lenkarms darstellen.

Bei einer Weiterentwicklung letzterer Ausführung ist eine Variante möglich, bei der das den Lenkarm aufnehmende Bauteil an nur einem Lenklager befestigt ist, das als Gelenklager ausgebildet it. Hierbei bildet dieses Lager zusammen mit dem am vorderen Ende des Längslenkers angebrachten, die Lenkachse. Bei einer solchen Ausführung sind auf jeder Seite zwei übereinanderliegende Laufrollenpaare notwendig, um die Aufnahme der auf den Lenkarm wirkenden Biegemomente infolge der im Fahrbetrieb auftretenden Belastungen zu ermöglichen. Dafür ist keine weitere Verdrehfreiheit der Lenkarmaufnahme erforderlich.

Ausführungsbeispiele, aus denen sich weitere erfinderische Merkmale ergeben, sind in der Zeichnung dargestellt. Es zeigen :
- Fig. 1: eine schematische Seitenansicht des Vorderradbereiches eines Motorrades mit erfindungsgemäßer Achsschenkellenkung.
- Fig. 2: eine schematische Vorderansicht des Vorderradbereiches eines Motorrades mit erfindungsgemäßer Achsschenkellenkung.
- Fig. 3: eine Ansicht der ersten Ausführung der Aufnahme des Lenkarms nach Art einer Explosionsdarstellung.
- Fig.3a: eine Ansicht einer weiteren Ausführung des oberen Lenkarmendes.
- Fig. 4: eine schematische Vorderansicht einer Ausführung der Lenkarmführung.
- Fig. 5: eine schematische Vorderansicht einer Ausführung der Lenkarmführung.
- Fig. 6: eine schematische Seitenansicht der Ausführung gemäß Fig. 4.
- Fig. 7: eine schematische Seitenansicht der Ausführung gemäß Fig. 5.
- Fig. 8: eine schematische Vorderansicht des Vorderradbereiches eines Motorrades mit einer weiteren Ausführung der erfindungsgemäßen Achsschenkellenkung.
- Fig. 9: eine schematische Seitenansicht der Ausführung gemäß Fig. 8.

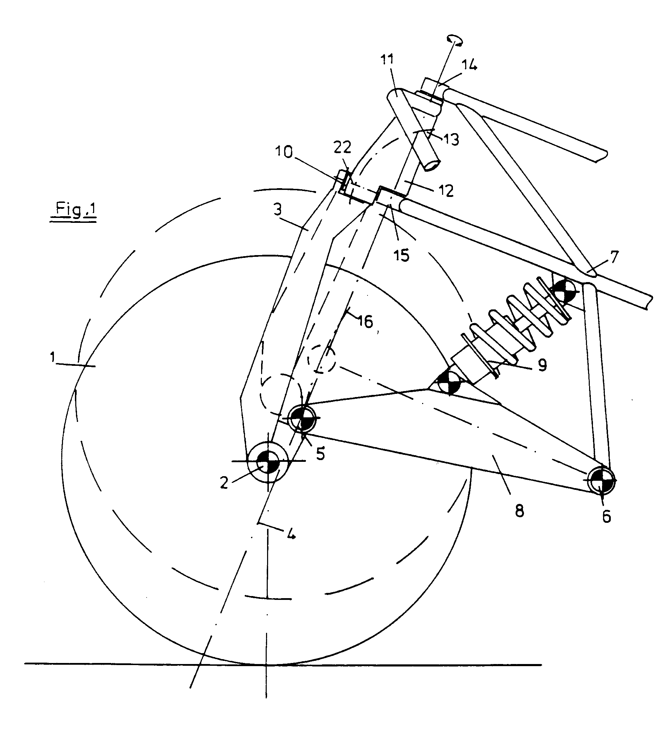

Fig.1 zeigt eine schematische Seitenansicht des Vorderradbereiches eines Motorrades mit erfindungsgemäßer Achsschenkellenkung. Das lenkbare Rad 1 ist auf einem hier nicht weiter dargestelltem Achsschenkel 2 am unteren Ende eines Lenkarms 3 gelagert. Am vorderen Lagerpunkt 5 des an seinem hinteren Lagerpunkt 6 am Fahrzeugrahmen 7 oder am Motorgehäuse angelenkten Längslenkers 8 befindet sich das untere Lenklager. Mit 9 ist ein Feder- Dämpfer- Element bezeichnet, das an seiner Unterseite am Längslenker 8 und mit seiner Oberseite am Fahrzeugrahmen 7 abgestützt ist, und somit infolge Einfederung des Vorderrades 1 auf Druck beansprucht wird. Das obere Ende des Lenkarms 3 ist mittels des Führungselementes 10 mit dem Bauteil 12 gekoppelt, in dem sich die Führungsschienen 13 befinden. Das Bauteil 12 ist an seiner Ober- und Unterseite in zwei die Lenkachse 4 bildenden Lagerungen 14 und 15 aufgenommen und überträgt die vom Fahrer über den Lenker 11 induzierten Lenkmomente auf den Lenkarm 3. Bei einer Einfederung des Vorderrades 1 bewegt sich das untere Lenklager 5 auf einer Kreisbahn 16 um den hinteren Anlenkpunkt der Vorderradschwinge 6. Dabei weicht die Kreisbahn 16 von der Lenkachse 4 ab. Um bei einem gleichzeitig eingeschlagenen Lenker die Funktionsfähigkeit der Lenkung zu gewährleisten, ist die zusätzliche Drehachse 22 erforderlich.

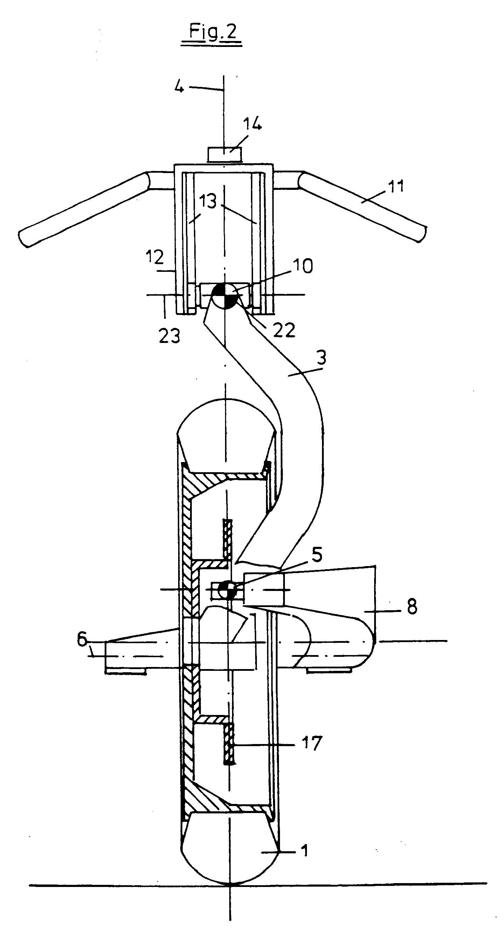

Fig.2 zeigt die Vorderansicht des Vorderradbereiches des in Fig.1 dargestellten Motorrades mit erfindungsgemäßer Achsschenkellenkung.
Der Lenkarm 3 ist an seiner Oberseite an der in Fahrtrichtung rechtwinklig zur Lenkachse 4 befindlichen Achse 22 mit dem Führungsbauteil 10 verbunden, welches mit der Achse 23 über vier Laufrollen sich bei einer Einfederung entlang der Lauf-und Führungsschienen 13 bewegt. Das untere, beispielsweise als Gelenkkopf ausgebildete Lenklager 5 befindet sich oberhalb des Radlagers in der Motorradlängsachse. Das Rad 1 und die Bremsscheibe 17 sind einseitig am Achsschenkel 2 gelagert.

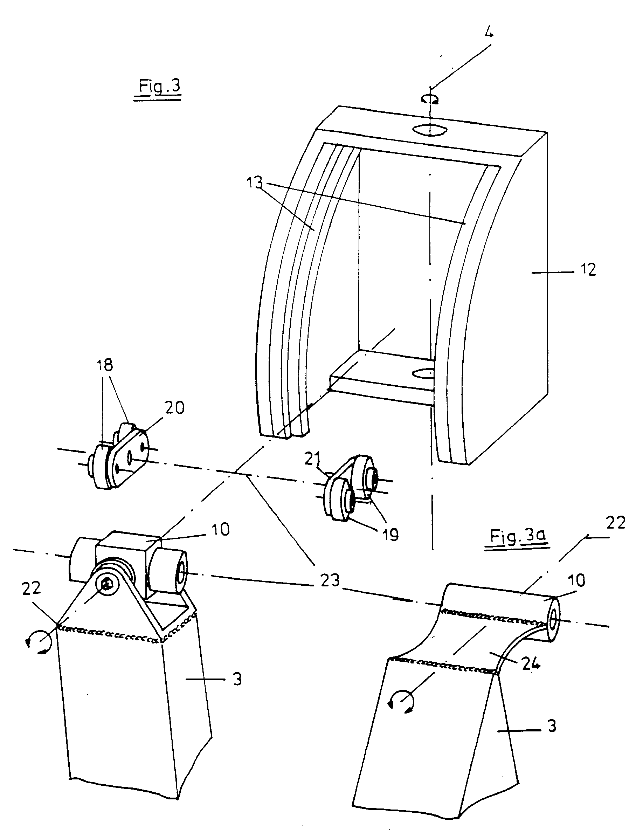

Fig.3 zeigt eine schematische Ansicht des die Führungsschienen 13 aufnehmenden Bauteils 12, das um die Lenkachse 4 drehbar ausgeführt ist. Der Lenkarm 3 ist an der Lagerachse 22 mit dem Führungsbauteil 10 verbunden, das wiederum an der Achse 23 die an je einer gemeinsamen Grundplatte 20 und 21 befestigten Laufrollenpaare 18 und 19 aufnimmt, die auf den nicht linearen Führungsschienen 13 ablaufen, und sowohl die Lenkmomente, wie die im Fahrbetrieb auftretenden Belastungen aufnehmen.

Fig.3a zeigt eine weitere Ausführungsmöglichkeit des oberen Endes des Lenkarmes 3. Um eine Verdrehfreiheit um die Achse 22 zu erreichen, ist hier der Lenkarm 3 mit einem um die Achse 22 elastisch verwindbarem, also torsionsweichem Bauteil 24 mit dem Führungsbauteil 10 verbunden.

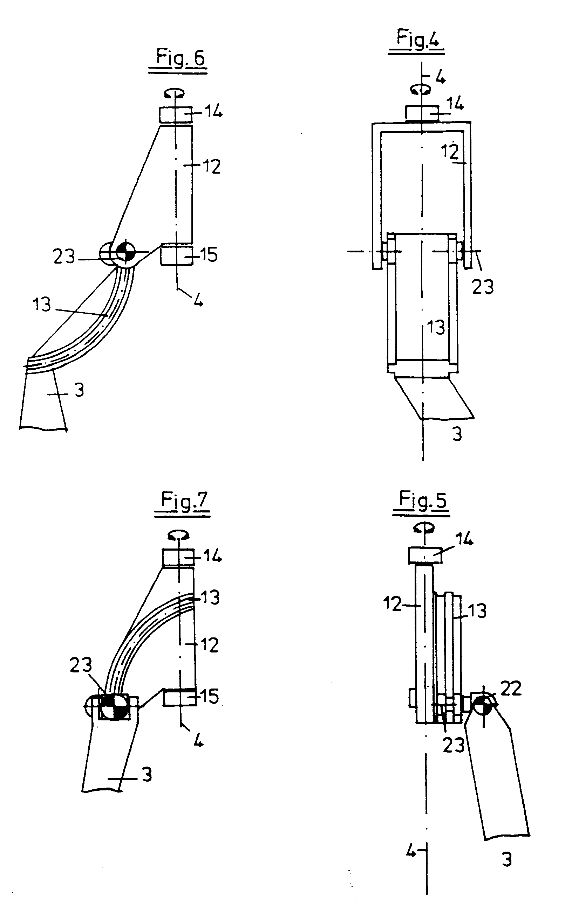

Fig. 4 zeigt eine weitere Ausführungsmöglichkeit der erfindungsgemäßen Lenkarmführung in einer Vorderansicht. Hierbei befinden sich die Führungsschienen 13 am oberen Ende des Lenkarms 3, während die zwei Laufrollenpaare auf der Achse 23 sich am um die Lenkachse 4 drehbaren Bauteil 12 befinden.

Fig.5 zeigt in einer Vorderansicht eine vereinfachte Ausführungsmöglichkeit der in Fig.1 bis 3 dargestellten, erfindungsgemäßen Achsschenkellenkung. Hierbei ist eine einseitige Führungsschiene 13 vorgesehen, die an dem um die Lenkachse 4 verdrehfrei gelagertem Bauteil 12 befestigt ist, und auf der zwei Laufrollenpaare abrollen, die mittels der Achse 23 mit dem Lenkarm 3 verbunden sind. Die Ausgleichsdrehachse 22 befindet sich hierbei außerhalb der Motorradlängsachse.

Fig.6 zeigt die Seitenansicht der Lenkarmführung nach Fig.4. Hierbei ist die infolge Einfederung nach hinten gerichtete Bewegung des Lenkarms 3 ersichtlich, der bei dieser Ausführung die Führungsschienen aufnimmt, während die um die Achse 23 gelagerten Laufrollenpaare sich in dem, mit Hilfe der Lager 14 und 15, um die Lenkachse 4 drehbarem Bauteil 12 befinden.

Fig.7 zeigt die Seitenansicht der Lenkarmführung nach Fig. 5. Hierbei ist der Lenkarm 3 einseitig an der Führungsschiene 13 angelenkt, die wiederum an einer Seite des Bauteils 12 befestigt ist.

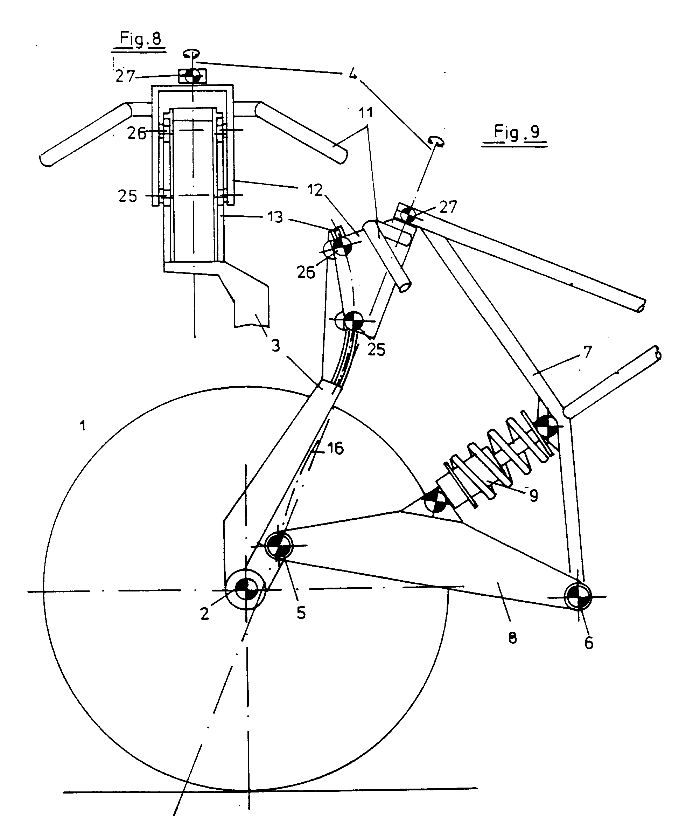

Fig.8 zeigt die schematische Vorderansicht einer weiteren Ausführungsmöglichkeit der erfindungsgemäßen Achsschenkellenkung.
Bei dieser Ausführung ist das Bauteil 12 mittels nur eines, durch einen Gelenkkopf gebildetes Lager 27 um die Lenkachse verdrehfrei gehalten. Die Führungsschienen 13 sind am Lenkarm 3 angebracht. Auf ihnen laufen vier Laufrollenpaare, die mittels der Achsen 25 und 26 am Bauteil 12 angelenkt sind, und die die Übertragung der über den Lenker 11 induzierten Lenkmomente ermöglichen.

Fig.9 zeigt eine schematische Seitenansicht des Vorderradbereiches eines Motorrades mit erfindungsgemäßer Achsschenkellenküng nach Fig.8.
Die Lagerung des Vorderrades erfolgt wie bei den vorhergehenden Ausführungen an einem Achsschenkel 2, der mit dem Lenkarm 3 verbunden ist, und an dem der Längslenker 8 mit dem das untere Lenklager bildendem vorderen Anlenkpunkt 5 befestigt ist. Der hintere Anlenkpunkt 6 des Längslenkers 8 befindet sich am Fahrzeugrahmen 7 oder am Motorgehäuse. Die Bewegung des Längslenkers 8 mit seinem vorderen Lagerpunkt 5 auf der Kreisbahn 16 um den hinteren Anlenkpunkt 6 kann mittels des am Längslenker 8 und am Fahrzeugrahmen 7 angelenkten Feder-Dämpfer - Elementes 9 abgefedert werden. Am oberen Ende des Lenkarms 3 befinden sich die nicht linearen Führungsschienen 13, die sich in den am Bauteil 12 in den Lagerachsen 25 und 26 gelagerten zwei Laufrollenpaare pro Seite bewegen, die auch das über den Lenker 11 aufgebrachte Lenkmoment um die durch die Verbindungsachse der Lagerpunkte 5 und 27 gebildete Lenkachse 4 aufnehmen. Dabei ist durch die Wahl der Krümmung, und deren Verlauf, der Führungsschienen 13 die Wahl der Einfederungskurve des Vorderrades 1, und der dabei auftretenden Reaktionen der Federung möglich.

## Patentansprüche

1. Achsschenkellenkung für ein Einspurfahrzeug, insbesondere ein Motorrad, bei dem das lenkbare Rad auf einem Achsschenkel am unteren Ende eines Lenkarms gelagert ist, welcher über ein Lenklager in dem vorderen Lagerpunkt eines mit seinem hinteren Lagerpunkt am Zweiradrahmen oder am Motorgehäuse angelenkten Längslenkers gehalten ist,
dadurch gekennzeichnet,
daß das obere Ende des Lenkarms (3) in einer nicht linearen Kulisse geführt ist.

2. Achsschenkellenkung nach Anspruch 1,
dadurch gekennzeichnet,
daß die Kulisse aus einer oder mehreren Führungsschienen (13) gebildet ist, auf denen sich Laufrollenpaare abwälzen.

3. Achsschenkellenkung nach Anspruch 2,
dadurch gekennzeichnet,
daß sich die Führungsschienen (13) in einem Bauteil (12) befinden, welches mittels zwei Lenklagern (14;15) um die Lenkachse verdrehfrei gelagert ist, während die Laufrollenpaare (18;19) mittels zwei Aufnahmestücken (20;21) über ein Koppelstück (10) mit dem Lenkarm (3) gekoppelt sind.

4. Achsschenkellenkung nach Anspruch 2,
dadurch gekennzeichnet,
daß sich die Führungsschienen (13) am oberen Ende des Lenkarms (3) befinden, während die Laufrollenpaare (18;19) mittels zwei Aufnahmestücken (20;21) mit dem der Lenkübertragung dienendem Bauteil (12) verbunden sind.

5. Achsschenkellenkung nach einem der Ansprüche 1-4,
dadurch gekennzeichnet,
daß eine zusätzliche Verdrehfreiheit des Koppelstücks (10) in Fahrzeuglängsrichtung, rechtwinklig zur Lenkachse vorhanden ist.

6. Achsschenkellenkung nach Anspruch 5,
dadurch gekennzeichnet,
daß die Verdrehfreiheit des Koppelstücks (10) gegenüber dem Lenkarm (3) über eine in Fahrzeuglängsrichtung, rechtwinklig zur Lenkachse (4) verlaufende Lagerachse (22) erreicht wird.

7. Achsschenkellenkung nach Anspruch 5,
dadurch gekennzeichnet,
daß die Verdrehfreiheit des Koppelstücks (10) gegenüber dem Lenkarm (3) über ein in Fahrzeuglängsrichtung, rechtwinklig zur Lenkachse (4) befindliches, torsionsweiches, das heißt elastisch verwindbares Bauteil (24) erreicht wird.

8. Achsschenkellenkung nach Anspruch 2,
dadurch gekennzeichnet,
daß sich die Führungsschienen (13) am oberen Ende des Lenkarms (3) befinden, und sich in zwei, über je ein Verbindungsstück gelagerten Paar Laufrollen bewegen, die sich ihrerseits übereinanderliegend an einem Bauteil (12) befinden, welches mit einem Gelenklager (27), dessen Verbindungslinie mit dem unteren Lenklager (5) die Lenkachse (4) darstellt, am Fahrzeugrahmen (7) gelagert ist.

9. Achsschenkellenkung nach einem der vorhergehenden Ansprüche,
dadurch gekennzeichnet,
daß die nicht lineare Führung des Lenkarms (3) aus einer Gleitlagerung besteht.

10. Achsschenkellenkung nach einem der vorhergehenden Ansprüche,
dadurch gekennzeichnet,
daß die Krümmung der Führungsschienen (13) einen Kreisabschnitt darstellt.

11. Achsschenkellenkung nach einem der vorhergehenden Ansprüche,
dadurch gekennzeichnet,
daß die Krümmung der Führungsschienen (13) den Abschnitt einer Parabel oder Hyperbel darstellt.

## Claims

1. A hub-steering system for a motorcycle or the like, including a steerable front wheel fixed at the lower end of a steering arm that is connected to the front end of a rod by means of a steering bearing, while the rod's rear end is fixed at the motorcycle's frame or engine,
characterized in that the steering arm's upper end (3) is connected with a not linear guidance system.

2. A hub-steering system as claimed in claim 1,
characterized in that the not linear guidance system is formed of at least one guidance rail (13), on that bearing pairs unroll.

3. A hub-steering system as claimed in claim 2,
characterized in that the guidance rails (13) are fixed in a part (12), that is rotable around the steering axis (4) by means of two steering bearings (14;15), while the bearing pairs (18;19) are connected to the steering arm (3) by means of two plates (20;21) and a connecting element (10).

4. A hub-steering system as claimed in claim 2,
characterized in that the guidance rails (13) are fixed at the steering arm's top end (3), while the bearing pairs (18;19) are connected with the steering element (12) by means of two plates (20;21).

5. A hub-steering system as claimed in claims 1 to 4,
characterized by an additional turnability of the connecting element (10) around the vehicle's longitudinal axis, rightangular to the steering axis.

6. A hub steering system as claimed in claim 5,
characterized in that the turnability of the connecting element (10) in relation to the steering arm (3) is solved by means of a bearing axis (22) that is directed in the vehicle's longitudinal axis, rightangular to the steering axis (4).

7. A hub-steering system as claimed in claim 5,
characterized in that the turnability of the connecting element (10) in relation to the steering arm (3) is solved by means of an elastic twistable connecting element (24), that is placed in the vehicle's longitudinal axis, rightangular to the steering axis (4).

8. A hub-steering system as claimed in claim 2,
characterized in that the guidance rails (13) are fixed at the steering arm's top end (3) and move in two pairs of bearings, that are placed one upon another on a part (12), that is fixed at the vehicle's frame by means of an universal pivotable bearing (27), and that the connecting line between this bearing and the lower steering bearing (5) forms the steering axis (4).

9. A hub-steering system as claimed in claims 1 to 8,
characterized in that the not linear guidance of the steering arm is reached by a gliding bearing.

10. A hub-steering system as claimed in claims 1 to 9,
characterized in that the guidance rails' (13) form is a cut of a circle.

11. A hub-steering system as claimed in claims 1 to 9,
characterized in that the guidance rails' (13) form is a cut of a parabel or hyperbel.

## Revendications

1. Dispositiv de guidage et suspension pour les motos et véhicules simulaire comprenant la roue dirigeable articulée à l'extrémité inférieur d'un bras de guidage, quel est articulé par un palier de guidage à l'extrémité avant d'un bras oscillant, dont fin arrière est articulé au cadre ou au bloc moteur,
caractérisée en ce que l'extrémité supérieur du bras de guidage (3) est guidée dans un guidage impair.

2. Dispositif de guidage et suspension selon revendication 1,
caractérisée en ce que le guidage est formée par un ou plusieurs rails de guidage (13), sur quelles pairs des rouleaus roulent.

3. Dispositif de guidage et suspension selon revendication 2,
caractérisée en ce que les rails de guidage (13) sont situé dans élément (12) quel est rotatif relatif a l'axis de guidage par deux paliers de guidage (14;15), et ce que les pairs des rouleaus (18;19) sont articulées au bras de guidage (3) par deux supports d'assemblages (20;21) et un élément d'accouplement (10).

4. Dispositif de guidage et suspension selon revendication 2,
caractérisée en ce que les rails de guidage (13) sont situé à l'extrémité supérieur du bras de guidage (3), tandis que les pairs des rouleaus (18;19) sont articulées a l'élément de guidage (12) par deux supports d'assemblages (20;21).

5. Dispositif de guidage et suspension selon revendication 1 à 4,
caractérisée par un additionnel abilité à tourneer de l'élément d'accouplement (10) en direction de l'axis longitudinal de la véhicule, rectangulaire à l'axis de guidage.

6. Dispositif de guidage et suspension selon revendication 5,
caractérisée en ce que l'abilité à tourner de l'élément d'accouplement (10) relatif au bras de guidage (3) est possible par un axis de palier (22) en direction de l'axis longitudinal de la véhicule, rectangulaire à l'axis de guidage (4).

7. Dispositif de guidage et suspension selon revendication 5,
caractérisée en ce que l'abilité à tourner de l'élément d'accouplement (10) relatif au bras de guidage (3) en direction de l'axis longitudinal de la véhicule, rectangulaire à l'axis de guidage (4) est possible par un élément rotatif élastique (24).

8. Dispositif de guidage et suspension selon revendication 2,
caractérisée en ce que les rail de guidage (13) sont situé a l'extrémité supérieur du bras de guidage (3) et mouvoient par deux pairs de rouleaus, quels sont chaque articulées à un support d'asssemblage, quels sont articulées l'un sur l'autre à un élément (12), quel est articulé au cadre par un palier joint (27), et ce que l'axis entre le palier joint et le palier de guidage inférieur (5) représente l'axis de guidage (4).

9. Dispositif de guidage et suspension selon revendication 1 à 8,
caractérisée en ce que le guidage impair du bras de guidage (3)est un palier glisser.

10. Dispositif de guidage et suspension selon revendication 1 à 8,
caractérisée en ce que l'incurvation des rails guidage (13) est un section d'un cercle.

11. Dispositif de guidage et suspension selon revendication 1 à 8,
caractérisée en ce que l'incurvation des rails de guidage (13) est un section d'un parabole ou d'un hyperbel.
